# DEMANDE DE BREVET EUROPEEN

(11) **EP 3 447 338 A1**
(43) Date de publication de la demande: **27.02.2019**
(21) Numéro de dépôt: 17187903.4
(22) Date de dépôt: 25.08.2017
(51) Int. Cl.: F16H 59/02

(54) **SYSTEME ANTI-PINCEMENT DANS UNE BOITE DE VITESSES D'UN VEHICULE AUTOMOBILE**

(71) Demandeur: DURA Automotive Holdings U.K., Ltd., Birmingham, B35 7AG (GB)
(72) Inventeur: DEVAUCHELLE, Frédéric, 78170 LA CELLE SAINT CLOUD (FR); GOMES, Adrien, 78450 VILLEPREUX (FR)
(74) Mandataire: Cabinet Laurent & Charras

(57) **Abrégé**

Système anti-pincement (1) dans une boîte de vitesses (3) d'un véhicule automobile comprenant un levier de commande (2) monté pivotant au moins d'avant en arrière autour d'un axe de passage des vitesses disposé à l'intérieur d'un boîtier (4).

Selon l'invention, le système anti-pincement (1) comprend un écran de protection (5) fixé au niveau d'une partie supérieure du boîtier (4), à l'arrière sur le chemin de pivotement du levier de sorte à empêcher l'insertion et le pincement d'un objet entre le levier et la partie supérieure du boîtier (4) lors du passage des vitesses.

## Description

### DOMAINE TECHNIQUE

L'invention se rattache au secteur technique des boîtes de vitesses d'un véhicule automobile, aussi bien manuelles qu'automatiques, et concerne plus particulièrement un système permettant d'éviter le pincement et le blocage d'un objet, par exemple les doigts d'un individu, entre un levier de commande et une partie fixe de la boîte de vitesses.

### ART ANTERIEUR

Dans l'état de la technique, il est connu des boîtes de vitesses d'un véhicule automobile comprenant un levier de commande monté pivotant, au moins d'avant en arrière, autour d'un axe de passage des vitesses disposé à l'intérieur d'un boîtier.

Ce type de boîte de vitesses peut aussi bien être automatique que manuel. Pour rappel, on entend par le terme « passage » des vitesses, l'action d'engager la vitesse après avoir sélectionné le couloir de la vitesse correspondante. Le mouvement de passage de vitesse s'effectue donc d'avant en arrière par rapport à l'orientation générale du véhicule.

L'inconvénient de l'état de la technique réside dans le fait qu'un objet, tel que les doigts d'un individu, peut se coincer entre le levier de commande et une partie fixe de la boîte de vitesses lors du passage des vitesses.

Pour remédier à cet inconvénient, il est connu, par exemple, de disposer une sorte de ruban en caoutchouc entre le levier de commande et la partie fixe de la boîte de vitesses pour empêcher le pincement d'un objet lors du passage des vitesses.

Cette solution, assez approximative, ne donne pas entière satisfaction en ce que le ruban peut bouger au cours du temps de sorte à ne plus assurer sa fonction de protection.

### EXPOSE DE L'INVENTION

L'un des buts de l'invention est donc de remédier aux inconvénients de l'art antérieur en proposant un système anti-pincement, lors du passage des vitesses, d'un objet entre un levier de commande et une partie fixe d'une boîte de vitesses, qui soit de conception simple, sûre et rationnelle, tout en assurant la fonction anti-pincement d'une manière fiable et optimale.

À cet effet, il a été mis au point un système anti-pincement dans une boîte de vitesses d'un véhicule automobile comprenant un levier de commande monté pivotant au moins d'avant en arrière autour d'un axe de passage des vitesses disposé à l'intérieur d'un boîtier.

Selon l'invention, le système anti-pincement comprend un écran de protection fixé au niveau d'une partie supérieure du boîtier, à l'arrière et sur le chemin de pivotement du levier de commande de sorte à empêcher l'insertion et le pincement d'un objet entre le levier de commande et la partie supérieure du boîtier lors du passage des vitesses.

De cette manière, l'écran de protection, fixé à une partie fixe du boîtier, empêche l'insertion d'un objet entre le levier et le boîtier, et assure ainsi une protection fiable et optimale.

Selon une forme de réalisation particulière, l'écran de protection se prolonge latéralement, et de part et d'autre, par deux parois incurvées en direction du levier de commande.

De cette manière, la protection est optimisée en ce que l'écran de protection empêche également l'insertion d'un objet selon une direction légèrement décalée par rapport au chemin de pivotement du levier de commande lors du passage des vitesses.

Avantageusement, l'écran de protection et la partie supérieure du boîtier comprennent des moyens complémentaires de fixation.

Par exemple, l'écran de protection comprend deux languettes latérales élastiques en forme de crochet venant, lors de la fixation de l'écran de protection, s'encliqueter dans deux logements complémentaires ménagés sur la partie supérieure du boîtier.

De préférence, l'écran de protection comprend également deux broches venant, lors de la fixation de l'écran de protection, s'insérer dans deux orifices complémentaires ménagés sur la partie supérieure du boîtier.

La direction d'encliquetage des languettes, et d'insertion des broches est avantageusement verticale afin de simplifier la mise en place et la fixation dudit écran de protection. Bien entendu, cette direction peut-être inclinée, ou être horizontale sans sortir du cadre de l'invention.

### DESCRIPTION SOMMAIRE DES FIGURES

D'autres avantages et caractéristiques ressortiront mieux de la description de l'invention qui va suivre, donnée à titre d'exemple non limitatif, à partir des dessins annexés dans lesquels :
- la figure 1 est une représentation schématique illustrant, en perspective, l'écran de protection du système anti-pincement, avant sa fixation sur le boîtier d'une boîte de vitesses ;
- la figure 2 une représentation schématique similaire à celle de la figure 1, illustrant l'écran de protection fixé sur le boîtier.

### DESCRIPTION DETAILLEE DE L'INVENTION

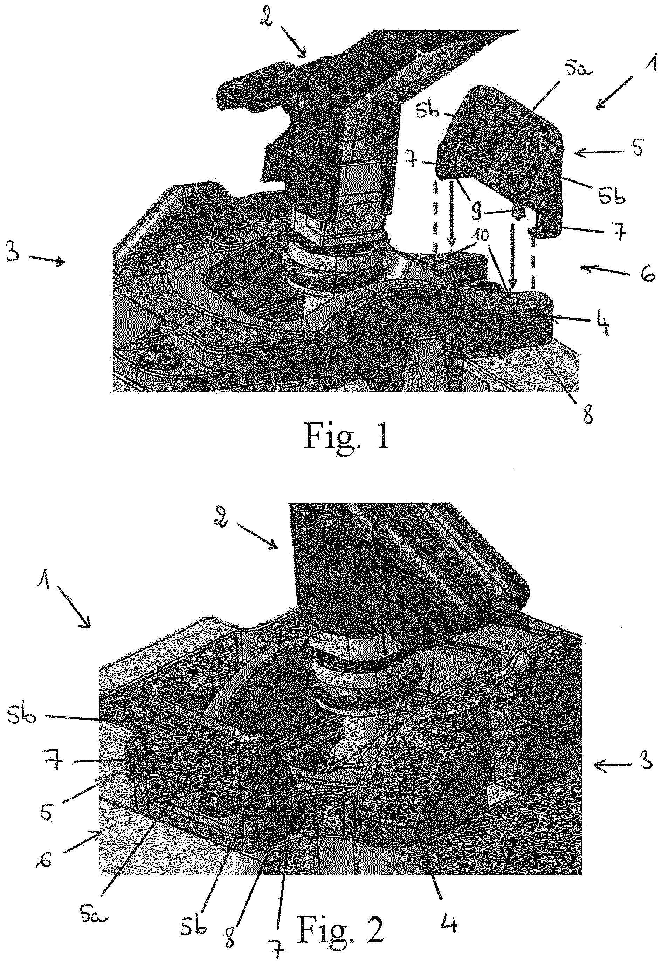

En référence aux figures 1 et 2, l'invention concerne un système anti-pincement (1) d'un objet, par exemple les doigts d'un individu, entre un levier de commande (2) d'une boîte de vitesses (3) d'un véhicule automobile et une partie fixe du boîtier (4) à l'intérieur duquel est monté le levier de commande (2).

Le système anti-pincement (1) selon l'invention peut aussi bien être monté dans une boîte de vitesses (3) automatique qu'une boîte de vitesses (3) manuelle.

La boîte de vitesses (3) comprend notamment, un levier de commande (2) monté pivotant au moins d'avant en arrière autour d'un axe de passage des vitesses disposé à l'intérieur du boîtier (4). Pour rappel, le passage des vitesses consiste à pivoter le levier de commande (2), d'avant en arrière, pour engager la vitesse correspondante.

Pour éviter le pincement et le blocage d'un objet entre le levier de commande (2) et la partie supérieure du boîtier (4) lors du mouvement de pivotement d'avant en arrière dudit levier de commande (2), le système anti-pincement (1) selon l'invention comprend un écran de protection (5) fixé au niveau d'une partie supérieure du boîtier (4).

L'écran de protection (5) est positionné en regard du levier de commande (2), de préférence de manière à définir un plan de protection parallèle au levier de commande (2) lorsqu'il se trouve en position neutre, c'est-à-dire un plan de protection sensiblement vertical, et disposé à l'arrière et sur le chemin de pivotement dudit levier de commande (2).

L'écran de protection (5) constitue donc une barrière venant faire obstacle à l'insertion d'un objet entre le levier de commande (2) et la partie supérieure du boîtier (4). De cette manière, l'insertion et le pincement d'un objet entre ledit levier (2) et la partie supérieure du boîtier (4) lors du passage des vitesses sont empêchés, voire rendus bien plus difficiles.

L'écran de protection (5) est de conception simple et comprend une paroi principale (5a), prolongée latéralement et de part et d'autre par deux portions de parois incurvées (5b) en direction du levier de commande (2), pour optimiser l'effet obstacle.

L'écran de protection (5) est fixé de toute manière appropriée à la partie supérieure du boîtier (4). L'écran de protection (5) et la partie supérieure du boîtier (4) comprennent, par exemple, des moyens complémentaires (6) de fixation constitués, par exemple, par deux languettes latérales élastiques (7) faisant saillies de l'écran de protection (5) et destinées à venir s'encliqueter dans deux logements complémentaires (8) ménagés sur la partie supérieure du boîtier (4).

Pour éviter le déplacement de l'écran de protection (5) en position de fixation, mais également pour guider la mise en place de l'écran de protection (5) lors de la fixation, ledit écran de protection (5) comprend deux broches (9) en saillies destinées à venir, lors de la fixation dudit boîtier (4), s'engager dans deux orifices complémentaires (10) ménagés sur le boîtier (4).

De préférence, et pour simplifier l'installation et la fixation de l'écran de protection (5), les languettes élastiques (7), ainsi que les broches (9) de guidage font saillies dans une direction verticale et parallèle à celle de la paroi principale (5a) de l'écran de protection (5), afin de définir une direction verticale d'encliquetage des languettes et d'insertion des broches (9).

Il ressort de ce qui précède que l'invention fournit un système anti-pincement (1) d'un objet entre un levier de commande (2) et une partie fixe d'un boîtier (4) d'une boîte de vitesses (3), qui est de conception simple, sûre et rationnelle, et qui permet de diminuer voir de supprimer d'une manière fiable et optimale les risques de pincement.

## Revendications

1. Système anti-pincement (1) dans une boîte de vitesses (3) d'un véhicule automobile comprenant un levier de commande (2) monté pivotant au moins d'avant en arrière autour d'un axe de passage des vitesses disposé à l'intérieur d'un boîtier (4), ***caractérisé* en ce que** le système anti-pincement (1) comprend un écran de protection (5) fixé au niveau d'une partie supérieure du boîtier (4), à l'arrière et sur le chemin de pivotement du levier de commande (2) de sorte à empêcher l'insertion et le pincement d'un objet entre le levier de commande (2) et la partie supérieure du boîtier (4) lors du passage des vitesses.

2. Système anti-pincement (1) selon la revendication 1, ***caractérisé* en ce que** l'écran de protection (5) se prolonge latéralement et de part et d'autre par deux parois (5b) incurvées en direction du levier de commande (2).

3. Système anti-pincement (1) selon la revendication 1, ***caractérisé* en ce que** l'écran de protection (5) et la partie supérieure du boîtier (4) comprennent des moyens complémentaires (6) de fixation.

4. Système anti-pincement (1) selon la revendication 3, ***caractérisé* en ce que** l'écran de protection (5) comprend deux languettes (7) latérales élastiques en forme de crochets venant, lors de la fixation de l'écran de protection (5), s'encliqueter dans deux logements complémentaires (8) ménagés sur la partie supérieure du boîtier (4).

5. Système anti-pincement (1) selon la revendication 4, ***caractérisé* en ce que** l'écran de protection (5) comprend deux broches (9) venant, lors de la fixation de l'écran de protection (5), s'insérer dans deux orifices complémentaires (10) ménagés sur la partie supérieure du boîtier (4).

6. Système anti-pincement (1) selon la revendication 5, ***caractérisé* en ce que** la direction d'encliquetage des languettes et d'insertion des broches (9) est verticale.
